# EUROPEAN PATENT APPLICATION

(11) **EP 2 278 263 A1**
(43) Date of publication of application: **26.01.2011**
(21) Application number: 10168740.8
(22) Date of filing: 07.07.2010
(51) Int. Cl.: G01B 7/06

(54) **Device for measuring metal wires of rectangular cross-section**

(30) Priority: 15.07.2009 IT TO20090528
(71) Applicant: Area Sistemi S.r.l., 10143 Torino (IT)
(72) Inventor: Pirinoli, Enrico Maria, I-10143 TORINO (IT)
(74) Representative: Fioravanti, Corrado

(57) **Abstract**

In order to measure a metal wire of rectangular cross-section advancing in a given longitudinal direction, the device comprises two levers (11, 12) which are mutually rotatably mounted about a transverse fulcrum axis (13). Two pairs of idle rollers (14, 15; 16, 17) opposed in pairs for rolling on opposite faces of the wire are mounted on the levers, equally spaced from and on opposite sides with respect to the fulcrum (13). A restoring spring (18) acts on the levers for bringing the two opposing rollers of each pair near to one another. A transducer (20) for detecting relative movements of the levers (11, 12) is connected to these levers.

## Description

The present invention relates to a device for measuring dimensions and detecting defects in wires, strips or metal bands of rectangular cross-section; the invention is intended to be used, in particular, but not exclusively, for measuring and monitoring the quality of insulated electric conductors with a rectangular cross-section (made of copper, aluminium, etc.) which are also known in the technical jargon as "flat wires" and are widely used for forming the windings in power transformers.

The device according to the present invention is typically used for continuously measuring the dimensions of the wire, performed directly during the wire production cycle.

Monitoring systems which are at present used for continuously measuring dimensions during production make use of laser apparatus which are mounted on a cradle oscillating in a transverse plane, perpendicular to the advancing direction of the wire. Laser systems, although ensuring high-precision measurement (error of less than 5 microns) of the wire dimensions, are, however, very costly and are unable to identify surface defects with continuity. Laser systems, in fact, perform only discrete checks of the advancing wire and do not perform measurement in a continuous manner. Moreover, in the case where the wire is an insulated conductor, with laser systems it is not possible to carry out directly on the wire any electrical insulation continuity tests, since lasers are not "direct-contact" measuring instruments.

The object of the invention is to provide a measuring device which is simple, robust and low-cost, but is able to monitor and measure continuously and precisely the dimensions of a metal wire of rectangular cross-section, detect surface irregularities and also act as an electrode useful for detecting any insulation defects in the insulation sheathing.

The above and other objects and advantages, which will be understood more clearly below, are achieved according to the invention by a device having the features defined in the appended claims.

A preferred, but non-limiting embodiment of a device according to the invention will now be described with reference to the accompanying drawings, in which:
Figures 1 and 2 are perspective views, from different angles,
   of a device according to the invention for measuring a metal wire of rectangular cross-section; and
Figures 3 to 6 are schematic views which show a system for
   constraining and supporting the device according to Figures 1 and 2.

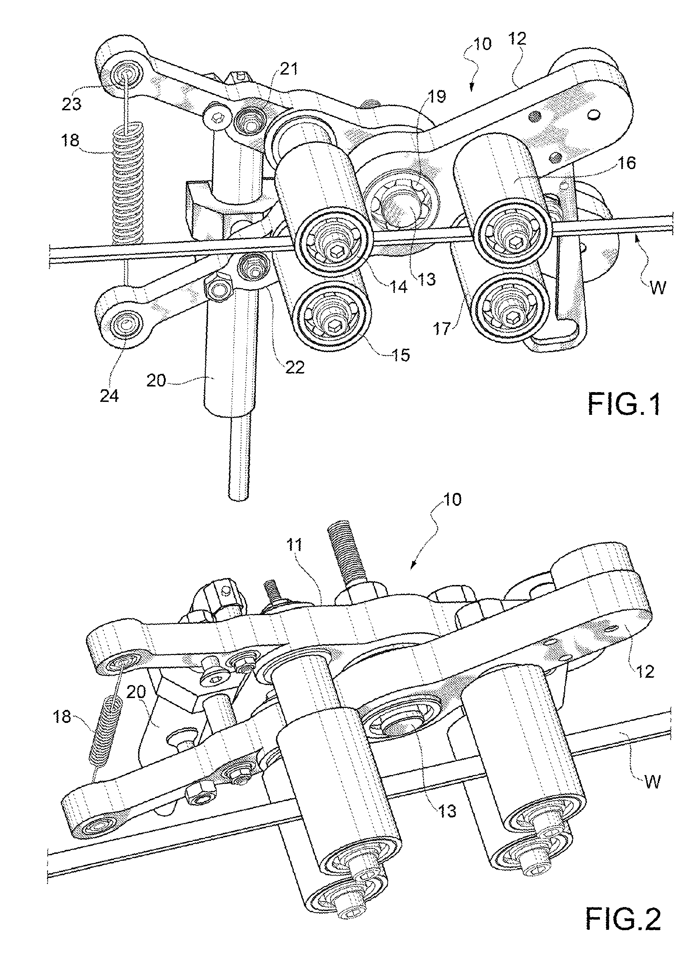

Referring initially to Figures 1 and 2, numeral 10 designates in its entirety a device for continuously measuring a dimension, defined here as transverse, of a metal wire with a rectangular cross-section, designated W, advancing in the direction of its main or longitudinal dimension.

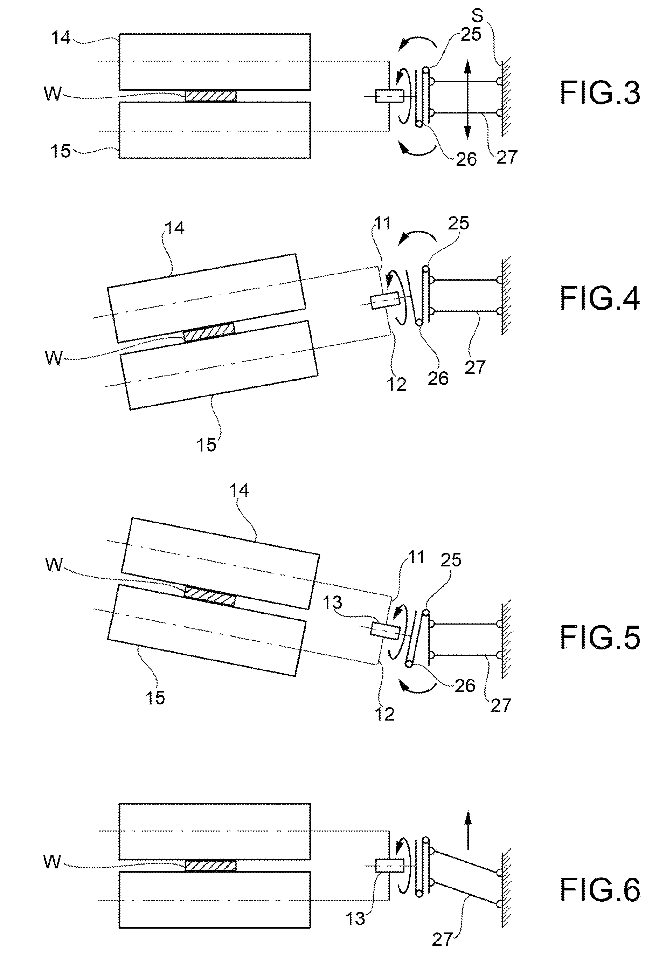

The device 10 comprises a mechanism which is articulated in a scissors-like arrangement and functions according to the principle of a pantograph. The device 10 includes a pair of levers 11, 12 pivotably mounted at an intermediate point about an axis 13 which is directed transversely with respect to the advancing direction of the wire. A preferred support system for the fulcrum axis is described further below with reference to Figures 3-6.

Two pairs of idle opposing rollers 14, 15 and 16, 17 between which the wire W to be monitored travels are mounted on the levers 11, 12. The rollers have axes which are parallel to that of the fulcrum and are equally spaced therefrom. These rollers are mounted in pairs on each lever, on opposite sides with respect to the fulcrum, one upstream and one downstream of the fulcrum, relative to the advancing direction of the wire.

An elastic restoring element 18 - in this example a spiral spring - biases the levers 11, 12 so as to bring the rollers of each pair near to one another, in order to keep them constantly in contact with both the opposite faces of the wire to be monitored.

The surfaces of the rollers in contact with the metal wire are made of rigid material, for example a stainless steel for bearings, or, more generally, any material with a hardness comparable to that of metal, for example ceramic material or resin with a high abrasion resistance.

Designated 20 is a linear displacement transducer, for example an LVDT (Linear Variable Differential Transformer) or a linear encoder or other transducer (the choice of the LVDT type transducer is to be understood as preferred, but not essential for the purposes of implementing the invention). Said transducer is rigidly fixed to both levers so as to measure precisely the linear displacement performed over time by two points which are equally spaced from the fulcrum and each situated on one of the two opposite levers.

By virtue of the above described mechanical configuration, if the wire to be measured is not present, both pairs of opposing rollers are in mutual contact owing to the restoring force exerted by the elastic element 18. The linear transducer 20 will therefore measure a fixed initial distance, which will be considered as the "zero point" of the instrument.

When, on the other hand, the wire is present between the pairs of rollers, opening of the cylindrical rollers, the directrices of which are now in contact with the two opposite flat surfaces of the rectangular wire, imparts to the two pivotably mounted levers an angular opening which is directly proportional to the thickness of the wire (i.e. to the parameter which is to be measured).

Owing to the presence of the double pair of rollers which ensures that the measurement axis of the transducer remains always perpendicular to the flat surfaces of the wire, the transducer 20 is able to measure a distance which is directly proportional to the thickness of the wire.

In fact, if the mechanical system were composed solely of a single pair of opposing rollers, the wire, during its advancing movement, could enter the system forming with the measurement axis of the transducer any (unknown) angle of incidence, and therefore measurement thereof would inevitably be altered.

When a part of the wire which has a thickness or a height different from that of the immediately preceding parts, for example an irregularity such as a projection or a recess, passes between one of the pairs of opposing rollers, the angle formed by the levers is subject to a momentary variation which is detected by the transducer and interpreted as being a defect.

According to an embodiment of the invention, the distance between the fulcrum and one of the constraining points of the transducer is greater than the distance between the fulcrum and the axes of the rollers. With this configuration it is possible to increase the oscillating movement of the levers, based on the operating principle of a pantograph, and therefore accurately detect local variations in thickness and lack of uniformity of the surface.

More than one seat for rotationally constraining the transducer 20 is preferably provided along each of the levers 11, 12. In the example shown in Figures 1 and 2, the transducer is mounted on the levers in two connection seats 21, 22, in this example holes, which are relatively close to the rollers 14, 15. In order to obtain a greater reading accuracy, the transducer may be mounted in a position farther from the fulcrum, for example in another two hinging seats 23, 24 situated in the vicinity of the ends of the levers, where in the example shown here the spring 18 is mounted. The greater the distance from the fulcrum, the more the oscillating movement of the levers is increased.

The electric output signals from the transducer, which contain the information regarding both the magnitude of the measurement and the surface irregularities of the wire, are supplied to an electronic processing unit (not shown) which is designed to provide the continuous value of the measurement and compare the variations detected with predefined threshold levels for identifying a defect. The modes of operation of the processing unit are *per* se widely known in the art and therefore do not require a specific description here, also because they are not relevant for the purposes of understanding the invention. This applies in particular to the ways in which the unit is programmed to take into consideration other operating factors such as the speed of advancement of the wire and the frequency with which the variations in thickness per unit of time are detected.

In an embodiment, the transducer is constrained to the two levers at two respective points which are equally spaced from the fulcrum, so that the linear transducer is perpendicular to the wire. This allows to detect variations in thickness in a direction perpendicular to the wire, simplifying processing of the data indicating the dimensions of the wire.

As regards the construction of the system for constraining and supporting the fulcrum of the pantograph mechanism, in a particularly preferred embodiment, schematically shown in Figure 3, the axis of the fulcrum 13 is connected to a fixed support structure S by means of a plurality of constraint means which, overall, provide the fulcrum with the capacity to adapt and follow small, although ever present movements which the wire inevitably performs while it advances. These movements may have components involving:
- twisting or rotation in a transverse vertical plane;
- inclination or flexing or rotation in a longitudinal vertical plane; and
- translation in a transverse vertical plane.

For this purpose, a certain capacity for twisting or rotation in a transverse vertical plane is provided by a doublehinge supporting mechanism 25, 26 which, opening alternately at the top or bottom, allows the axis 13 to perform oscillations in the aforementioned plane. The double hinge is mounted on a fixed support by means of an articulated quadrilateral support 27 which allows the device to perform vertical movements. A pair of rolling bearings 19, one of which is shown in the drawings and via which the levers 11 and 12 are mounted on the fulcrum, allows the two levers to assist the oscillating movements of the wire in the longitudinal vertical plane.

It will be appreciated that the device described above is particularly effective for measuring the wire accurately. Owing to the capacity of the system to follow the movements of the wire, the rollers may be constantly kept in contact against the opposite faces of the wire over the entire width of the rollers. On the other hand, if the fulcrum of the mechanism supporting the rollers were fixed, when the wire is inclined in a plane transverse with respect to the rollers, an angle would inevitably be formed between the opposite faces of the wire and the axes of the rollers, said angle, although being minimal, causing widening of the angle between the levers of the mechanism and, consequently, altering the value detected by the transducer.

It can also be appreciated that the device according to the invention is compact, robust and simple to install, as well as capable of being applied directly to the production line. Dimensional monitoring is performed in a completely automatic manner, without the need for any human intervention. With regard to the defect detection capacity, the sensitivity of the transducer, which acts in an exclusively differential manner, does not need to be re-calibrated when conductors with different dimensions must be monitored.

The device according to the invention may also be used for measuring and detecting the surface defects in an insulated conductor wire. In this case, the contact between rollers and wire ensured by the mechanical system may also be effectively used for detecting the continuity of the conductor insulation. In fact it is sufficient for a pair of rollers (which in this case are necessarily made of metal) to be electrically insulated from the rest of the mechanical components by means of suitable insulators mounted on the levers 11 and 12. The rollers thus insulated may then be connected to the electronic detection sensor (not shown) and therefore act as an electrode for measuring the insulation continuity of the wire.

It is understood that the invention is not to be regarded as being limited to the embodiment described and illustrated here, which is exemplary of the device. The invention, however, may be subject to modifications in terms of forms, dimensions, arrangement of parts, as well as constructional and operational details. For example, in an alternative embodiment not shown, the system for constraining the fulcrum includes a swivel joint.

## Claims

1. A device for measuring a metal wire of rectangular cross-section advancing in a given longitudinal direction, **characterised by** comprising:
- two levers (11, 12) mutually rotatably mounted about a substantially transverse fulcrum axis (13);
- two pairs of idle rollers (14, 15; 16, 17), opposed in pairs for rolling on opposite faces of the wire, wherein on each lever two of said rollers are mounted equally spaced from and on opposite sides with respect to the fulcrum (13);
- an elastic means (18) acting on the levers for bringing the two opposing rollers of each pair near to one another;
- a transducer (20) connected to the levers (11, 12) for detecting relative movements thereof.

2. A measuring device according to claim 1, **characterised in that** the transducer is connected to the two levers (11, 12) at two respective points equally spaced from the fulcrum (13).

3. A measuring device according to claim 1 or 2, **characterised in that** the distance between the fulcrum (13) and any one of the connection points (21-24) of the transducer (20) is greater than the distance between the fulcrum and the axes of the rollers (14-17).

4. A measuring device according to any one of the preceding claims, **characterised in that** the fulcrum axis (13) is associated with a complex constraint system for mounting the device on a fixed support structure (S), said constraint system comprising first constraint means (25, 26) allowing the fulcrum axis (13) to oscillate in a vertical plane which is transverse with respect to said longitudinal direction.

5. A measuring device according to claim 4, **characterised in that** the first constraint means include a doublehinge supporting mechanism (25, 26) which is rotatable about two parallel longitudinal axes.

6. A measuring device according to any one of the preceding claims, **characterised in that** the constraint system comprises second constraint means (27) which allow the fulcrum axis (13) to accomplish upward and downward movements.

7. A measuring device according to claim 6, **characterised in that** the second constraint means include an articulated quadrilateral supporting mechanism (27).

8. A measuring device according to any one of the preceding claims, **characterised in that** the transducer (20) is a linear displacement transducer.
